# EUROPÄISCHE PATENTANMELDUNG

(11) **EP 3 677 771 A1**
(43) Veröffentlichungstag der Anmeldung: **08.07.2020**
(21) Anmeldenummer: 20150530.2
(22) Anmeldetag: 07.01.2020
(51) Int. Cl.: F03D 3/04

(54) **VERTIKALE WINDENERGIEANLAGE**

(30) Priorität: 07.01.2019 DE 102019100208
(71) Anmelder: Petersen, Dirk, 38104 Braunschweig (DE)
(72) Erfinder: Petersen, Dirk, 38104 Braunschweig (DE)
(74) Vertreter: Gramm, Lins & Partner Patent- und Rechtsanwälte PartGmbB

(57) **Zusammenfassung**

Die Erfindung betrifft eine vertikale Windenergieanlage (2), mit (a) zumindest einem Rotor (4) zum Antreiben einer Arbeitsmaschine (8), der an einer drehbar gelagerten Rotorwelle (6) angeordnet ist, und (b) einem Gehäuse (10), das die Rotorwelle (6) und den Rotor (4) zumindest teilumfänglich umgibt und relativ zu der Rotorwelle (6) drehbar an einer Basis (20) gelagert ist. Erfindungsgemäß vorgesehen ist (c) zumindest eine Drehvorrichtung (24), die eingerichtet ist, das Gehäuse (10) automatisch in Abhängigkeit zumindest eines Parameters zu drehen und dabei den Rotor (4) derart in einen Windschatten des Gehäuses (10) zu bringen, dass ein kinetischer Parameter der Rotorwelle (6) über einen Windgeschwindigkeits-Betriebsbereich und/oder einen Windrichtungs-Betriebsbereich einem Sollwert entspricht, und dass (d) das Gehäuse (10) ein Windleitelement (14) zum Leiten von Wind (W) auf den Rotor zu aufweist, wobei das Windleitelement (14) dem Wind (W) einen größeren Widerstand entgegensetzt als das übrige Gehäuse, sodass das Gehäuse (10) durch den anströmenden Wind (W) mit einem Drehmoment in Drehrichtung beaufschlagt wird.

## Beschreibung

Die Erfindung betrifft eine vertikale Windenergieanlage, mit (a) zumindest einem Rotor zum Antreiben einer Arbeitsmaschine, der an einer drehbar gelagerten Rotorwelle angeordnet ist, und (b) einem Gehäuse, das die Rotorwelle und den Rotor zumindest teilumfänglich umgibt und relativ zu der Rotorwelle drehbar an einer Basis gelagert ist sowie ein Verfahren zum Betreiben einer vertikalen Windenergieanlage.

Windenergieanlagen dienen zur Nutzbarmachung der kinetischen Energie des Windes. Konventionelle Windenergieanlagen werden üblicherweise unterschieden in Anlagen mit horizontaler Drehachse, die auch als horizontale Windenergieanlagen bezeichnet werden können, bei denen die Rotor-Drehachse im Wesentlichen orthogonal zum Schwerefeld der Erde und horizontal zum Wind ausgerichtet ist und in Anlagen mit vertikaler Drehachse, die auch als vertikale Windenergieanlagen bezeichnet werden können, bei denen die Rotor-Drehachse im Wesentlichen parallel zum Schwerefeld der Erde und vertikal zum Wind verläuft.

Bei Windenergieanlagen mit horizontaler Drehachse gibt es Ausführungsformen mit einem, zwei oder drei Flügeln, wobei die Flügel in sich verwunden sind, um bei radial sich verändernden Flügelumfangs-Geschwindigkeiten optimale Strömungsverhältnisse zu realisieren. Die Auslegung erfolgt in Anlehnung an Tragflächen von Flugzeugen.

Nachteilig bei diesen Ausführungsformen ist die nicht unerhebliche Geräuschentwicklung aufgrund der hohen Umfangsgeschwindigkeit im äußeren Radiusbereichen. Obwohl die Drehzahl von großen Windenergieanlagen nur ca. 10 bis 40 U/min beträgt, entstehen Umfangsgeschwindigkeiten bis zu 300 km/h. Dies erzeugt Strömungsgeräusche.

Als weiterer Nachteil sind die hohen Kosten aufgrund der Bauform zu nennen. Das komplette Maschinenhaus befindet sich mit allen seinen technischen Einrichtungen in der Nabe des Windrades. Die Nabenhöhe beträgt bei neueren Anlagen bis zu 100 m über dem Erdboden. Folglich müssen alle Einrichtungen in diese Höhe transportiert, montiert und auch gewartet werden. Des Weiteren werden auch die Schlagschatten von in der Nähe einer Windenergieanlage lebenden Anwohnern als störend empfunden.

Üblicherweise wird ab einer Windgeschwindigkeit von rund 9 bis 12 m/s die aus der Auftriebskraft resultierende Rotorleistung begrenzt bzw. geregelt, um die vorgegebene Nennleistung nicht zu übersteigen, da es sonst zu Überlastungen und Materialschäden kommen könnte. Zu den hierzu erforderlichen Hauptkonzepten gehören die sogenannten Stall- und Pitch-Regelungen. Für die Stall-Regelung benötigt der Flügel ein vorgegebenes Profil, das einen gezielt ausgelegten Strömungsabriss bei einer bestimmten, aus Umfangsgeschwindigkeit und Windgeschwindigkeit resultierenden, Strömungsgeschwindigkeit bewirkt. Bei der Pitch-Regelung werden die Flügel zusätzlich zu aerodynamischen Maßnahmen mechanisch verdreht.

Die Windrichtungsnachführung erfolgt am Turm der Anlage beispielsweise durch ein sogenanntes Azimut-Getriebe. Dieses Getriebe besteht meist aus einem Ritzel und einem Zahnkranz. In deren Verzahnung treten Spiele auf, die Geräusche verursachen. Zur Vermeidung und zur Verringerung dieser Geräusche sind schwingungsdämpfende Maßnahmen erforderlich, wie zum Beispiel das sogenannte elektrische Verspannen mehrerer Getriebe oder zusätzliche Bremsen. Windrichtungsnachführung, Leistungsregelung und Abschaltung sind komplexe Systeme und bedeuten daher einen großen technischen Aufwand.

Ein Beispiel eines Windrades mit vertikaler Drehachse ist der Savonius-Rotor, der in AT 103 819 B und DE 495 518 A beschrieben ist.

Ein weiteres Beispiel für eine Windenergieanlage mit vertikaler Drehachse ist der Darrieus-Rotor, der in US 1,835,018 beschrieben ist und mit senkrechten, auf einer Bogenlinie gekrümmten Blättern oder mit geraden Blättern als H-Rotor ausgebildet ist. Daneben gibt es auch Kombinationen aus Savonius- und Darrieus-Rotor, insbesondere um Anlaufprobleme beim Darrieus-Rotor zu vermeiden, sowie Anordnungen mit verstellbaren Klappen oder Flügeln, deren Wirkprinzip darin besteht, dem Wind in der Windrichtung viel Widerstand entgegen zu setzen und auf der gegenüberliegenden Seite dem Wind nur wenig Widerstand entgegen zu setzen, wie beispielsweise in DE 29 52 657 A1 beschrieben.

Die US 4,474,529 A beschreibt eine Windkraftanlage, die einen Windschild aufweist, der drehbar um eine Rotorwelle der Windkraftanlage angeordnet ist. Der Windschild kann über eine Konstruktion mehrerer Windfahnen in Abhängigkeit der Windgeschwindigkeit gedreht werden.

Aus der DE 24 05 767 A1 ist eine vertikale Windturbine bekannt, die von einer seitlich offenen und drehbaren Trommel umgeben ist. Diese weist ein Steuerruder auf, um die Windturbine stets in den Wind zu drehen, damit möglichst viel Wind durch die seitliche Windeintrittsöffnung in die Trommel einströmt.

Nachteilig ist jedoch, dass keine Leistungsregelung, Leistungsbegrenzung oder Abschaltung beispielsweise bei hohen Windgeschwindigkeiten möglich ist. Für netzeinspeisende Anlagen, bei denen nahezu konstante Rotordrehzahlen erforderlich sind, sind solche Regelungen jedoch unverzichtbar.

Der Erfindung liegt die Aufgabe zugrunde, Nachteile im Stand der Technik zu vermindern.

Die Erfindung löst die gestellte Aufgabe durch eine vertikale Windenergieanlage, die sich durch zumindest eine Drehvorrichtung auszeichnet, die eingerichtet ist, das Gehäuse automatisch in Abhängigkeit zumindest eines Parameters zu drehen und dabei den Rotor derart in einen Windschatten des Gehäuses zu bringen, dass ein kinetischer Parameter der Rotorwelle über einen Windgeschwindigkeits-Betriebsbereich und/oder einen Windrichtungs-Betriebsbereich einem Sollwert entspricht und dass das Gehäuse ein Windleitelement zum Leiten von Wind auf den Rotor zu aufweist, wobei das Windleitelement dem Wind einen größeren Widerstand entgegensetzt als das übrige Gehäuse, sodass das Gehäuse durch den anströmenden Wind mit einem Drehmoment in Drehrichtung beaufschlagt wird.

Die Erfindung löst die gestellte Aufgabe zudem durch ein Verfahren zum Betreiben einer vertikalen Windenergieanlage nach einem der vorstehenden Ansprüche, wobei die vertikale Windenergieanlage einem Wind ausgesetzt ist, mit den Schritten: (a) Bestimmen eines kinetischen Parameters der Rotorwelle, (b) Vergleichen des kinetischen Parameters mit einem Sollwert, und (c) Drehen des Gehäuses, sodass ein im Windschatten des Gehäuses liegender Anteil des Rotors verändert wird, bis der kinetische Parameter mit dem Sollwert übereinstimmt.

Eine erfindungsgemäße Windenergieanlage weist zumindest einen Rotor auf, der an einer drehbar gelagerten Rotorwelle angeordnet ist. Dieser Rotor weist zumindest einen, vorzugsweise zumindest drei, weiter vorzugsweise zumindest sechs, insbesondere genau sechs oder genau 9 Flügel auf. Der zumindest eine Flügel weist vorzugsweise an seinem von der Rotorwelle abgewandten Ende eine Schaufel auf. Die Schaufel ist vorzugsweise gebogen, insbesondere zylindersegmentförmig ausgebildet. Besonders bevorzugt ist die Schaufel halbzylindersegmentförmig ausgebildet.

Darunter, dass ein Bauteil zylindersegmentförmig ausgebildet ist, wird insbesondere verstanden, dass das Bauteil entlang eines gedachten Zylindersegments verläuft, also insbesondere einem Mantelflächensegment eines gedachten Zylinders folgt. Es ist bevorzugt, nicht aber notwendig, dass es sich bei dem Zylindersegment um ein Kreiszylindersegment handelt.

Es ist möglich, nicht aber notwendig, dass die Rotorflügel eines Rotors oder aller Rotoren gleich lang sind. Bevorzugt weist jeder Rotor Flügel mit unterschiedlichen Längen auf, um einströmenden Wind über eine größere Breite einzufangen.

Strömt ein Wind auf zumindest einen Flügel des Rotors, so wird hierdurch die drehbar gelagerte Rotorwelle in Drehung versetzt. Die hierbei entstehende Drehbewegung wird vorzugsweise zum Antreiben einer Arbeitsmaschine genutzt. Bei der Arbeitsmaschine handelt es sich vorzugsweise um einen Generator, beispielsweise um einen Generator oder Asynchrongenerator mit vier oder mehr Polen, um eine Pumpe oder einen Kompressor. Bevorzugt weist die Rotorwelle hierzu ein Kopplungselement zum Koppeln mit der Arbeitsmaschine auf. Es ist bevorzugt, nicht aber notwendig, dass die Arbeitsmaschine Teil der vertikalen Windenergieanlage ist.

Die vertikale Windenergieanlage weist zudem ein Gehäuse auf, das die Rotorwelle und den Rotor zumindest teilumfänglich umgibt. Das Gehäuse besteht vorzugsweise aus Metall oder einer Metalllegierung, insbesondere aus Stahl oder Aluminium. Vorzugsweise ist das Gehäuse versteift und/oder weist zumindest ein Versteifungselement auf.

Das Merkmal, dass das Gehäuse die Rotorwelle und den Rotor teilumfänglich umgibt, umfasst auch, dass das Gehäuse Bereiche aufweist, in denen es die Rotorwelle und den Rotor vollumfänglich umgibt. Dies ist beispielsweise der Fall, wenn das Gehäuse in Richtung entlang der Rotordrehachse fenestriert ist, also Gehäuse-Ausnehmungen aufweist, durch die der Wind durchströmen kann, wobei gleichzeitig Bereiche vorhanden sind, in denen das Gehäuse den Rotor und die Rotorwelle vollständig umschließt. Dies entspricht einer Ausführungsform der vorliegenden Erfindung und ist beispielsweise sinnvoll, um eine erhöhte Stabilität des Gehäuses zu gewährleisten, oder wenn die vertikale Windenergieanlage modular aufgebaut ist.

Das Gehäuse ist relativ zu der Rotorwelle drehbar an einer Basis gelagert, vorzugswiese mittels eines Wälzlagers, insbesondere eines Kugellagers. Die Drehachse der Rotorwelle und die Drehachse des Gehäuses fallen dabei bevorzugt zusammen.

Zum Drehen des Gehäuses relativ zu der Rotorwelle weist die vertikale Windenergieanlage zumindest eine Drehvorrichtung auf, die eingerichtet ist, das Gehäuse automatisch in Abhängigkeit zumindest eines Parameters zu drehen.

Unter Drehvorrichtung im erfindungsgemäßen Sinne wird jedes Bauteil der vertikalen Windenergieanlage verstanden, das eingerichtet ist, das Gehäuse automatisch in Abhängigkeit zumindest eines Parameters zu drehen. Die Drehvorrichtung kann aus mehreren unterschiedlichen Bauteilen aufgebaut sein, die jeweils eingerichtet sind, das Gehäuse automatisch in Abhängigkeit zumindest eines Parameters zu drehen, wobei die Parameter jeweils identisch sein können oder aber unterschiedlich sind, was einer bevorzugten Ausführungsform der Erfindung entspricht.

Die Drehvorrichtung weist vorzugsweise einen Stellantrieb auf, insbesondere in Form eines Azimut-Antriebs, der auch als Azimutgetriebe bezeichnet werden kann. Dieser weist ein Ritzel auf, das bevorzugt an der Basis angeordnet ist. Das Gehäuse weist einen zu dem Ritzel korrespondierenden Zahnkranz auf. Vorzugsweise weist der Stellantrieb eine Feststelleinrichtung und/oder Bremsen zum Blockieren und/oder Bremsen der Drehbewegung des Gehäuses auf.

Alternativ oder zusätzlich weist die Drehvorrichtung eine Windfahne auf, die insbesondere mit dem Gehäuse verbunden ist.

Wenn die Windenergieanlage einen Azimut-Antrieb und eine Windfahne aufweist, was einer bevorzugten Ausführungsform der Erfindung entspricht, so sind diese vorzugsweise derart eingerichtet und/oder ausgebildet, dass sie das Gehäuse gleichzeitig drehen, also das Gehäuse gleichzeitig mittels des Azimut-Getriebes und mittels der Windfahne mit einem Drehmoment beaufschlagt wird. Hierdurch ist es insbesondere möglich, das Gehäuse schneller zu drehen und so schneller auf sich ändernde Gegebenheiten wie Windrichtung und/oder Windgeschwindigkeit zu reagieren.

Bei dem zumindest einen Parameter, in Abhängigkeit von dem das Gehäuse automatisch gedreht wird, handelt es sich vorzugsweise um die Windgeschwindigkeit, die Windrichtung, die Drehzahl oder Drehgeschwindigkeit der Rotorwelle und/oder Kombinationen daraus oder daraus abgeleitete oder errechnete Größen. Zum Bestimmen des zumindest einen Parameters weist die vertikale Windenergieanlage vorzugsweise zumindest einen Sensor und/oder eine elektronische Datenverarbeitungseinrichtung auf, die beispielsweise Teil einer elektronischen Steuervorrichtung ist. Der zumindest eine Sensor umfasst vorzugsweise ein Anemometer.

Bei dem kinetischen Parameter der Rotorwelle handelt es sich vorzugsweise um die Drehzahl oder die Drehgeschwindigkeit der Rotorwelle. Insbesondere bei netzeinspeisenden Windenergieanlagen ist es notwendig, dass die Rotorwelle auch bei unterschiedlichen Windgeschwindigkeiten eine konstante Drehzahl aufweist. Unter einem konstanten Parameter oder dem Konstanthalten eines Parameters wird im Rahmen der vorliegenden Erfindung insbesondere verstanden, dass der Parameter um höchstens ± 20%, insbesondere höchstens ± 10% schwankt.

Darunter, dass der kinetische Parameter einem Sollwert entspricht wird insbesondere verstanden, dass er höchstens ± 20%, bevorzugt höchstens ± 10% um den Sollwert schwankt. Diese Schwankungsbreite wird auch als Nennbereich bezeichnet. Der Sollwert ist bei Verwendung der Drehzahl als kinetischem Parameter die Nenn-Drehzahl.

Darunter, dass der Rotor in den Windschatten des Gehäuses gebracht wird, wird insbesondere verstanden, dass der Rotor durch eine Drehung des Gehäuses teilweise, insbesondere auch vollständig in dessen Windschatten gebracht wird. Es ist insbesondere nicht gemeint, dass der Rotor selbst in den Windschatten des Windschattenelements bewegt wird.

Der kinetische Parameter entspricht über einen Windgeschwindigkeits-Betriebsbereich und/oder einen Windrichtungs-Betriebsbereich einem Sollparameter. Der Windgeschwindigkeits-Betriebsbereich reicht von einer Nenn-Windgeschwindigkeit bis zu einer Abschalt-Windgeschwindigkeit und ist insbesondere durch die konkrete Ausgestaltung der jeweiligen vertikalen Windenergieanlage determiniert. Vorzugsweise liegt die Nenn-Windgeschwindigkeit im Bereich von 10 m/s bis 16 m/s, insbesondere beträgt sie 12 m/s. Die Abschalt-Windgeschwindigkeit liegt vorzugsweise im Bereich von 20 m/s bis 34 m/s. Darunter, dass die Windgeschwindigkeiten einen bestimmten Wert betragen wird insbesondere verstanden, dass der tatsächliche Wert nicht mehr als ± 20 %, insbesondere nicht mehr als ± 10 % von dem genannten Wert abweicht.

Ein weiterer Parameter von Windenergieanlagen ist die Anlauf-Windgeschwindigkeit. Dies ist die Windgeschwindigkeit, ab der sich die Rotorwelle infolge des auf den zumindest einen Rotor strömenden Windes zu Drehen beginnt. Diese Anlauf-Windgeschwindigkeit der erfindungsgemäßen vertikalen Windenergieanlage beträgt vorzugsweise 2,5 m/s bis 4,5 m/s. Von der Anlauf-Windgeschwindigkeit bis zur Nenn-Windgeschwindigkeit liegt der sogenannte Drehzahl-variable Bereich. In diesem ist vorzugsweise ein Generator, der von der Windenergieanlage angetrieben wird, von einem Stromnetz getrennt. In einer bevorzugten Ausführungsform bleibt der Generator auch im Drehzahl-variablen Bereich über zumindest einen Frequenzumrichter mit dem Stromnetz verbunden.

Daneben gibt es die Überlebens-Windgeschwindigkeit, ab der der Windenergieanlage, insbesondere trotz bereits erfolgter Abschaltung, strukturelle Schäden infolge der Windeinwirkung drohen. Die Überlebens-Windgeschwindigkeit der erfindungsgemäßen vertikalen Windenergieanlage liegt vorzugsweise im Bereich von 50 m/s bis 70 m/s.

Darunter, dass der kinetische Parameter über einen Windrichtungs-Betriebsbereich einem Sollwert entspricht, wird insbesondere verstanden, dass der kinetische Parameter auch bei unterschiedlichen, insbesondere sich ändernden Windrichtungen dem Sollwert entspricht. Dies wird insbesondere über ein Drehen des Gehäuses in Abhängigkeit der Windrichtung realisiert. Vorzugsweise ist die Drehvorrichtung eingerichtet, das Gehäuse automatisch auch oder ausschließlich in Abhängigkeit von der Windrichtung zu drehen. Dies kann auch als Windrichtungsnachführung bezeichnet werden. Der Windrichtungs-Betriebsbereich umfasst insbesondere die Windrichtungen, bei denen die Windenergieanlage betrieben werden kann. Bevorzugt ist die Windenergieanlage bei Wind aus allen Windrichtungen betreibbar. Hierzu ist das Gehäuse vorzugsweise vollständig um die Rotorwelle herum drehbar.

Mittels des drehbaren Gehäuses ist es möglich, die Fläche des Rotors, die von einem durch die vertikale Windenergieanlage strömenden Wind erfasst wird, einzustellen und vorzugeben. So ist es beispielsweise möglich, einem schwachen Wind eine große oder maximale Angriffsfläche auf den Rotor zu bieten und diese Angriffsfläche bei stärkeren Winden zu verkleinern. Auf diese Weise ist es möglich, die Rotorwellen-Drehzahl auch bei unterschiedlichen Windgeschwindigkeiten konstant zu halten. Dabei werden beispielsweise größere Windgeschwindigkeiten durch eine entsprechend kleinere Angriffsfläche an dem Rotor ausgeglichen. Ab einer gewissen Windgeschwindigkeit, die insbesondere der Abschalt-Windgeschwindigkeit entspricht, ist es jedoch trotz Verringerns der vom Wind erfassten Fläche des Rotors nicht mehr möglich, die Rotordrehzahl konstant oder in dem Nennbereich zu halten. Dann ist es vorzugsweise mittels des Gehäuses möglich, den Rotor vollständig vom Wind abzuschatten und die Anlage so abzuschalten. Auf diese Weise können Beschädigungen am Rotor und/oder an der Rotorwelle vermieden werden.

Zudem ist es durch die Drehbarkeit des Gehäuses wie bereits beschrieben möglich, bei der vorliegenden vertikalen Windenergieanlage eine Windrichtungsnachführung zu realisieren. Dabei wird das Gehäuse beispielsweise in Abhängigkeit von der Windrichtung gedreht, um eine gewünschte vom Wind erfasste Fläche des Rotors einzustellen.

Die Windenergieanlage weist vorzugsweise eine Höhe von zumindest 6 m auf, weiter vorzugsweise von zumindest 20 m, besonders bevorzugt von zumindest 60 m auf. Die Höhe ist vorzugsweise kleiner als 200 m. Der Durchmesser der Windenergieanlage beträgt vorzugsweise bis zu 10%, insbesondere genau 10% der Höhe der vertikalen Windenergieanlage. Eine bevorzugte Ausführungsform der Erfindung weist eine Höhe von 60 m und einen Durchmesser von 10 m auf.

Vorzugsweise weist die vertikale Windenergieanlage Stelzen auf, über die sie mit dem Erdboden verbunden ist. Für die Bestimmung der Höhe der Windenergieanlage wird die Höhe der Stelzen vorzugsweise nicht mit eingerechnet. Die Höhe der Stelzen liegt bevorzugt im Bereich von 2 m bis 15 m, insbesondere beträgt sie 10 m ± 20 %.

Bevorzugt erzielt die erfindungsgemäße vertikale Windenergieanlage im Betrieb bei Nenn-Drehzahl eine Leistungsabgabe von 20 bis 100 kW, vorzugsweise 40 bis 60 kW. Bei einer Windgeschwindigkeit von 12 m/s erzielt die vertikale Windenergieanlage vorzugsweise eine maximale Leistungsabgabe von 300 W pro Quadratmeter winddurchströmte Fläche (W/m²) ± 20 %, weiter vorzugsweise 300 W/m² ± 10 %, insbesondere genau 300 W/m².

Die Erfindung bezieht sich insbesondere auch auf vertikale Klein-Windenergieanlagen mit einer Leistungsabgabe bei Nenndrehzahl von 0,5 kW bis 5 kW, insbesondere 1 kW. Eine solche Klein-Windenergieanlage weist beispielsweise eine Höhe von 6 m und einen Durchmesser von 1 m auf.

Der Rotor und/oder die Rotorwelle bestehen bevorzugt aus einem Metall oder einer Metalllegierung, insbesondere aus Stahl oder Aluminium. In einer alternativen Ausführungsform bestehen der Rotor und/oder die Rotorwelle aus einem Kunststoff, was insbesondere bei Klein-Windenergieanlagen vorteilhaft ist.

Vorzugsweise weist das Gehäuse ein zylindersegmentförmiges Windschattenelement auf, in dessen Windschatten der Rotor zumindest teilweise bringbar ist.

Darunter, dass der Rotor zumindest teilweise in den Windschatten des Windschattenelements bringbar ist, wird insbesondere verstanden, dass der Rotor durch eine Drehung des Windschattenelements teilweise, insbesondere auch vollständig in dessen Windschatten gebracht werden kann. Es ist insbesondere nicht gemeint, dass der Rotor selbst in den Windschatten des Windschattenelements bewegt wird.

Bevorzugt ist das zylindersegmentförmige Windschattenelement halbzylindersegmentförmig ausgebildet. Unter einem Halbzylinder ist ein längsgeschnittener Zylinder zu verstehen, wobei die Schnittebene durch die Zylinderachse verläuft. Bevorzugt verläuft das Windschattenelement kreiszylindersegmentförmig, also im Querschnitt entlang eines Kreisbogens. Das Windschattenelement wird durch die Drehvorrichtung, insbesondere die Windfahne und/oder den Stellantrieb automatisch bewegt.

Das Gehäuse weist ein Windleitelement zum Leiten von Wind auf den Rotor zu auf.

Bei dem Windleitelement handelt es sich vorzugsweise um ein gebogenes Windleitblech. Das Windleitelement ist vorzugsweise konkav in Richtung auf die Rotorwelle ausgebildet. Bevorzugt liegt das Windleitelement dem Windschattenelement radial gegenüber. Das Windleitelement und das Windschattenelement sind vorzugsweise über weitere Gehäusebauteile, beispielsweise einen unteren und/oder oberen Abschlussboden, miteinander verbunden und drehen sich synchron zueinander.

Das Windschattenelement und das Windleitelement bilden zumindest eine Windzuleitungsöffnung und zumindest eine Windableitungsöffnung aus. Durch die Windzuleitungsöffnung tritt anströmender Wind in die Windenergieanlage ein und durch die Windableitungsöffnung wieder aus.

Bevorzugt weist das Gehäuse im Bereich der Windzuleitungsöffnung ein winddurchlässiges Schutzelement auf, beispielsweise ein Gitter oder einen Maschendraht, um insbesondere zu verhindern, dass Gegenstände oder Lebewesen beispielsweise mit dem Wind durch die Windzuleitungsöffnung in die Windenergieanlage eindringen können und dort Schaden nehmen oder verursachen können. Wenn die Windenergieanlage ein fenestriertes Gehäuse mit Gehäuse-Ausnehmungen aufweist, so ist vorzugsweise zumindest ein winddurchlässiges Schutzelement im Bereich der Gehäuseausnehmungen angeordnet.

Bevorzugt weist auch die Windableitungsöffnung ein solches winddurchlässiges Schutzelement auf, wodurch auch bei Stillstand der Anlage gewährleistet ist, dass keine Lebewesen oder Gegenstände in die Windenergieanlage eindringen können.

Bevorzugt sind das Windschattenelement und/oder das Windleitelement versteift und/oder weisen zumindest ein Versteifungselement auf.

Bevorzugt weist die Drehvorrichtung eine Windfahne auf, die zumindest ein Feder-Dämpfer-Element besitzt.

Die Windfahne ist derart an dem Gehäuse, insbesondere an dem Windschattenelement, befestigt, dass ein Anstellwinkel der Windfahne relativ zu dem Gehäuse, insbesondere relativ zum Windschattenelement, veränderbar ist. Bevorzugt ist die Windfahne über ein Gelenk an dem Gehäuse, insbesondere an der Windfahne befestigt.

Bevorzugt weist das Windschattenelement einen unteren und/oder einen oberen Abschlussboden auf, an welchem das Feder-Dämpfer-Element bevorzugt befestigt ist. Die Steifigkeits- und Dämpfungseigenschaften des Feder-Dämpfer-Elements sind vorzugsweise vor dessen Inbetriebnahme variabel einstellbar, sodass beispielsweise eine Kennlinie des Feder-Dämpfer-Elements voreinstellbar ist. Hierzu weist das Feder-Dämpfer-Element vorzugsweise Stellelemente zum Justieren der Eigenschaften auf. Es ist möglich, nicht aber notwendig, dass die Kennlinie ausschließlich durch die Wahl von Material und/oder Geometrie des Feder-Dämpfer-Elements eingestellt wird. Die Kennlinie ist beispielsweise die Abhängigkeit der Federkraft von der Windgeschwindigkeit des Windes, der auf die Windfahne wirkt.

Vorzugsweise steigt die Federkraft des Feder-Dämpfer-Elements mit steigender Windgeschwindigkeit, sodass Veränderungen des Anstellwinkels bei größeren Windgeschwindigkeiten stärker gedämpft werden. Das Feder-Dämpfer-Element weist vorzugsweise zumindest eine konische Feder auf. Die Kennlinie des Feder-Dämpfer-Elements kann darüber hinaus auch durch die Anlenkungsposition an der Windfahne und/oder am Gehäuse beeinflusst werden. Hierzu ist vorzugsweise eine Mehrzahl an Anlenkungselementen, beispielsweise Ausnehmungen oder Ösen, an dem Gehäuse und/oder der Windfahne angeordnet. Auf diese Weise kann die Anlenkungsposition des Feder-Dämpfer-Elements auch nach der Montage der Windenergieanlage auf einfache Weise geändert werden und so beispielsweise die Kennlinie des Feder-Dämpfer-Elements zu verändern.

Das Feder-Dämpfer-Element ist gemäß einer Ausführungsform der Erfindung passiv ausgebildet, sodass sich die eingestellten Eigenschaften während des Betriebs, also insbesondere die Kennlinie, nicht verändern. Unter einem passiven Feder-Dämpfer-Element wird verstanden, dass keine gespeicherte elektrische oder mechanische Energie aufgewendet wird, um das Feder-Dämpfer-Element zu bewegen.

Ein passives Feder-Dämpfer-Element ist beispielsweise vorteilhaft, wenn die vertikale Windenergieanlage in Regionen eingesetzt wird, in denen keine stationäre Stromversorgung besteht. Dann ist es möglich, über das Feder-Dämpfer-Element und die diesem aufgeprägten Eigenschaften die Drehung des Gehäuses in Abhängigkeit der Windgeschwindigkeit so zu wählen, dass keine aktive Steuerung nötig ist. Hierzu wird beispielsweise das Feder-Dämpfer-Element derart eingestellt, dass bei unterschiedlichen Windgeschwindigkeiten eine Nenndrehzahl der Rotorwelle eingehalten wird. Unter Einhalten der Nenndrehzahl wird insbesondere verstanden, dass die Nenndrehzahl um nicht mehr als 20 % über- oder unterschritten wird, bevorzugt um nicht mehr als 10 % über- oder unterschritten wird.

In einer weiteren Ausführungsform der vorliegenden Erfindung besitzt die Windfahne zusätzlich oder anstelle des Feder-Dämpfer-Elements ein aktives Stellelement, beispielsweise einen Linearmotor oder Linearantrieb. Mittels des aktiven Stellelements ist es beispielsweise möglich, den Anstellwinkel der Windfahne relativ zum Windschattenelement aktiv einzustellen und zu bestimmen. Wenn die Windenergieanlage ein aktives Stellelement aufweist, weist die Drehvorrichtung vorzugsweise keinen Azimut-Antrieb auf.

Bei einem Linearmotor wird beispielsweise eine Spule im Magnetfeld eines Stators, beispielsweise Permanentmagneten, bewegt. Zum Bremsen und/oder Arretieren der Windfahne bei einem bestimmten Anstellwinkel weist der Linearmotor vorzugsweise eine Brems- und/oder Feststelleinrichtung auf. Die Brems- und/oder Feststellvorrichtung ist vorzugsweise im Basisgehäuse angeordnet.

Besonders bevorzugt handelt es sich bei der aktiven Stelleinrichtung um einen Linearantrieb mit einer Trapezgewindespindel. Diese bietet den Vorteil, dass im unbewegten Zustand eine starre Verbindung hergestellt ist und somit insbesondere keine Bremsoder Feststelleinrichtung notwendig ist.

Die aktive Stelleinrichtung kann manuell, beispielsweise von einer Leitzentrale aus, gesteuert werden oder aber, was eine bevorzugte Ausführungsform der Erfindung ist, automatisch in Abhängigkeit zumindest eines Parameters, wie beispielsweise der Drehzahl des Rotors und/oder der Windgeschwindigkeit und/oder der Windrichtung gesteuert werden.

Wenn das Gehäuse den Rotor nicht vollständig gegenüber dem anströmenden Wind abschattet, so strömt der Wind auf der einen Seite der Windenergieanlage auf den Rotor und das vorzugsweise vorhandene Windleitelement auf der radial gegenüberliegenden Seite an dem Gehäuse entlang. Das Windleitelement setzt dem Wind hierbei einen größeren Widerstand entgegen als das übrige Gehäuse, sodass das Gehäuse durch den anströmenden Wind mit einem Drehmoment in Drehrichtung beaufschlagt wird.

Die Drehvorrichtung, also insbesondere der Azimut-Antrieb und/oder das Feder-Dämpfer-Element und/oder das aktive Stellelement sind vorzugsweise derart ausgebildet und/oder eingerichtet, dass das Gehäuse erst ab Erreichen der Nenn-Windgeschwindigkeit eine Drehbewegung in Abhängigkeit des zumindest einen Parameters erfährt, damit bis zum Erreichen der Nenn-Windgeschwindigkeit eine maximale Angriffsfläche für den Wind vorliegt. Durch den anströmenden Wind und dessen Einwirkung auf das Gehäuse entsteht wie bereits beschrieben schon vor Erreichen der Nenn-Windgeschwindigkeit ein auf das Gehäuse wirkendes Drehmoment. Die Drehvorrichtung muss diesem Drehmoment folglich bis zum Erreichen der Nenn-Windgeschwindigkeit entgegenwirken, um eine Drehung des Gehäuses bei geringeren Windgeschwindigkeiten zu verhinden. Im Falle des Azimut-Antriebs wird dieser beispielsweise mittels einer Brems- und/oder Feststelleinrichtung gebremst oder blockiert. Im Falle des aktiven Stellelements wird der Anstellwinkel der Windfahne durch Verkürzen oder Verlängern des Abstands zwischen dessen Anlenkungspunkten derart eingestellt und geregelt, dass das Gehäuse keine Drehbewegung erfährt. Das Feder-Dämpfer-Element ist vorzugsweise gegen einen Anschlag vorgespannt, um eine Auslenkung der Windfahne erst ab Erreichen der Nenn-Windgeschwindigkeit zu gestatten.

Bevorzugt ist eine Federkraft des zumindest einen Feder-Dämpfer-Elements einstellbar und dem Feder-Dämpfer-Element ist eine Einstellvorrichtung zugeordnet, die eingerichtet ist, die Federkraft in Abhängigkeit der Windgeschwindigkeit automatisch einzustellen.

Bei einem solchen aktiv ansteuerbaren Feder-Dämpfer-Element ist es möglich, dass dem Feder-Dämpfer-Element keine feste Kennlinie aufgeprägt werden muss, sondern die Steifigkeits- und Dämpfungseigenschaften aktiv einstellbar sind. Auf diese Weise kann beispielsweise auf eine Vielzahl von Gegebenheiten wie beispielsweise Windrichtungsänderungen oder Änderungen der Windgeschwindigkeit aktiv reagiert werden. Hierdurch ist eine größere Flexibilität möglich, als mit einem passiven Feder-Dämpfer-Element, dessen Kennlinie im Betrieb festgelegt ist.

Bevorzugt steigt die Federkraft des Feder-Dämpfer-Element mit steigender Windgeschwindigkeit. Besonders bevorzugt steigt sie jedoch erst ab Erreichen eines kinetischen Sollparameters, wie beispielsweise einer Nenn-Drehzahl und/oder der Sollleistung eines angeschlossenen Generators und/oder der Nenn-Windgeschwindigkeit, mit steigender Windgeschwindigkeit an. Die Nenn-Windgeschwindigkeit kann auch als Auslegungs-Windgeschwindigkeit bezeichnet werden.

Bevorzugt weist die vertikale Windenergieanlage eine elektronische Steuereinrichtung auf, die eingerichtet ist, automatisch auf die zumindest eine Drehvorrichtung einzuwirken.

Diese Einwirkung kann beispielsweise aktiv in Abhängigkeit des zumindest einen Parameters erfolgen, beispielsweise durch aktives Drehen oder Stoppen einer Drehung des Gehäuses. Darüber hinaus ist es beispielsweise möglich, sofern vorhanden, die Charakteristika des Feder-Dämpfer-Systems aktiv zu verändern oder die Windfahne aktiv zu schwenken und somit den Anstellwinkel relativ zu dem Gehäuse, insbesondere relativ zu dem Windschattenelement, zu verändern.

Bevorzugt ist die elektronische Steuereinrichtung eingerichtet, automatisch bei Überschreiten einer Nenn-Windgeschwindigkeit und/oder eines kinetischen Soll-Parameters, das Gehäuse zu drehen, um den im Windschatten des Gehäuses liegenden Anteil des Rotors zu vergrößern.

Bei dem kinetischen Sollparameter handelt es sich beispielsweise um die Nenn-Drehzahl oder Nenn-Drehgeschwindigkeit der Rotorwelle.

Wie bereits beschrieben, werden Windenergieanlagen üblicherweise mit einer Nenn-drehzahl bzw. in einem Nennbereich, beispielsweise Nenndrehzahl ± 20%, insbesondere Nenndrehzahl ±10 % betrieben. Sofern die obere Grenze des Nennbereichs erreicht oder nahezu erreicht wird, wird das Gehäuse automatisch derart gedreht, dass der im Windschatten des Gehäuses liegende Anteil des Rotors vergrößert wird. Somit verringert sich die Angriffsfläche des Windes auf den Rotor und die Drehzahl der Rotorwelle sinkt. Die Drehung des Gehäuses wird beispielsweise in der Position gestoppt, in der die Nenndrehzahl wieder erreicht ist.

Gleiches gilt umgekehrt für den Fall, dass die untere Grenze des Nennbereichs erreicht oder nahezu erreicht wird. Dann wird das Gehäuse entsprechend derart gedreht, dass der im Windschatten des Gehäuses liegende Anteil des Rotors verkleinert wird, sofern dies möglich ist. Hierdurch vergrößert sich die Angriffsfläche des Windes auf den Rotor und die Drehzahl der Rotorwelle steigt. Bei hohen Windgeschwindigkeiten, insbesondere ab Erreichen der Abschalt-Windgeschwindigkeit, kann die Drehzahl auch nicht durch Vergrößern des im Windschatten liegenden Anteils des Rotors derart verringert werden, dass sie wieder der Nenndrehzahl entspricht. Bei solchen starken Winden wird die Windenergieanlage vorzugsweise durch vollständiges Abschatten des Rotors abgeschaltet.

Bevorzugt weist die Basis ein Basisgehäuse auf, in dem die Arbeitsmaschine angeordnet ist. Das Basisgehäuse befindet sich vorzugsweise am unteren, also dem Erdboden näheren Ende der vertikalen Windenergieanlage. Bevorzugt ist das Basisgehäuse im betriebsbereiten Zustand mit dem Erdboden direkt oder über Stelzen verbunden. Dies ist vorteilhaft, da die Arbeitsmaschine, beispielsweise ein Generator, nicht in großer Höhe montiert werden muss, sondern möglichst bodennah. Dies erleichtert sowohl die Montage als auch Wartungsarbeiten.

Bevorzugt besteht die vertikale Windenergieanlage aus zumindest zwei Modulen, wobei jedes Modul (a) zumindest einen Rotor aufweist, der an einem Rotorwellenteilstück angeordnet ist, und (b) jeweils ein Gebäudeteilstück aufweist, wobei die Rotorwellenteilstücke miteinander zusammenwirken und die Rotorwelle bilden und die Gehäuseteilstücke miteinander zusammenwirken und das Gehäuse bilden.

Vorzugsweise sind diese Module identisch aufgebaut. Zum Errichten einer vertikalen Windenergieanlage werden zumindest zwei Module in Bezug auf das Schwerefeld der Erde aufeinander angeordnet, wobei die Gehäuseteilstücke miteinander zusammenwirken, beispielweise miteinander in Eingriff treten und die Rotorwellenteilstücke miteinander zusammenwirken, beispielsweise miteinander in Eingriff treten oder mechanisch gekoppelt werden, sodass diese sich wie ein Bauteil verhalten. Bevorzugt werden zumindest vier, weiter bevorzugt zumindest sechs, besonders bevorzugt zumindest 10, insbesondere genau zehn Module aufeinander angeordnet. Bevorzugt sind höchstens 30 Module aufeinander angeordnet.

Bevorzugt wird das unterste Modul auf einem Basisbauteil angeordnet, welches die Basis der Windenergieanlage bildet, an der das Gehäuse drehbar gelagert ist.

Bevorzugt können die Module auch jeweils einzeln eine eigenständige Windenergieanlage bilden, sofern sie insbesondere mit einem Basisbauteil verbunden sind.

Gemäß einer bevorzugten Ausführungsform weisen lediglich das im montierten Zustand unterste Modul einen unteren Abschlussboden und/oder das im montierten Zustand oberste Modul einen oberen Abschlussboden auf. Die übrigen Module weisen Zwischenböden auf, die vorzugsweise jeweils einen Rahmen, der zu dem Querschnitt des Gehäuses korrespondiert, und eine Aufnahme für die Rotorwelle aufweisen. Der Rahmen und die Aufnahme sind vorzugsweise über eine Mehrzahl von Streben miteinander verbunden. Hierdurch können insbesondere Material und Gewicht eingespart werden.

Bei dem erfindungsgemäßen Verfahren zum Betreiben einer vertikalen Windenergieanlage, wobei die vertikale Windenergieanlage einem Wind ausgesetzt ist, wird zunächst ein kinetischer Parameter der Rotorwelle bestimmt. Bei diesem kinetischen Parameter handelt es sich beispielsweise um die Drehzahl oder die Drehgeschwindigkeit der Rotorachse.

Anschließend wird der kinetische Parameter mit einem Sollparameter verglichen. Bei diesem Sollparameter handelt es sich beispielsweise um eine Nenndrehzahl der Windenergieanlage.

Anschließend wird das Gehäuse derart gedreht, dass ein im Windschatten des Gehäuses liegender Anteil des Rotors verändert wird, bis der kinetische Parameter mit dem Sollwert übereinstimmt. Unter Übereinstimmen wird insbesondere verstanden, dass der kinetische Parameter nicht mehr als ±20%, insbesondere nicht mehr als ±10% von dem Sollparameter abweicht.

Alternativ oder zusätzlich werden andere Parameter, wie beispielsweise die Windgeschwindigkeit bestimmt und die Drehung des Gehäuses erfolgt zumindest teilwiese oder vollständig in Abhängigkeit von diesen Parametern. Auf diese Weise ist es beispielsweise möglich, ab Erreichen einer bestimmten Abschalt-Windgeschwindigkeit den Rotor vollständig abzuschatten und die Windenergieanlage so abzuschalten.

Bevorzugt ist der kinetische Parameter die Drehzahl der Rotorwelle, wobei die Rotorwelle bei einer Nenn-Windgeschwindigkeit ihre Nenn-Drehzahl aufweist, wobei das Gehäuse bei einer Überschreitung der Nenn-Windgeschwindigkeit derart gedreht wird, dass der im Windschatten des Gehäuses liegende Anteil des Rotors monoton in Abhängigkeit von der Überschreitung vergrößert wird.

Dies erfolgt jedoch vorzugsweise nur bis zum Erreichen der Abschalt-Windgeschwindigkeit. Dann wird der Rotor bevorzugt vollständig abgeschattet und die Windenergieanlage damit abgeschaltet.

Alternativ ist der kinetische Parameter die Momentanleistung eines von der Rotorwelle angetriebenen Generators.

Im Folgenden wird die Erfindung anhand der beiliegenden Figuren näher erläutert. Es zeigen
- Figur 1: eine schematische Perspektivdarstellung einer Ausführungsform der vorliegenden Erfindung,
- Figur 2: eine Draufsicht auf die Ausführungsform gemäß Figur 1,
- Figur 3: eine schematische Perspektivdarstellung einer Weiterbildung der Ausführungsformen gemäß den Figuren 1 und 2,
- Figur 4: eine Draufsicht auf die Ausführungsform gemäß Figur 3 in einer ersten Position,
- Figur 5: eine Draufsicht auf die Ausführungsform gemäß Figur 3 in einer zweiten Position,
- Figur 6: eine schematische Perspektivdarstellung einer weiteren Ausführungsform einer vertikalen Windenergieanlage,
- Figur 7: eine schematische Darstellung von drei Windenergieanlagen mit unterschiedlich stark gedrehten Gehäusen,
- Figur 8: eine Perspektivdarstellung eines Windparks mit vier vertikalen Windenergieanlagen, und

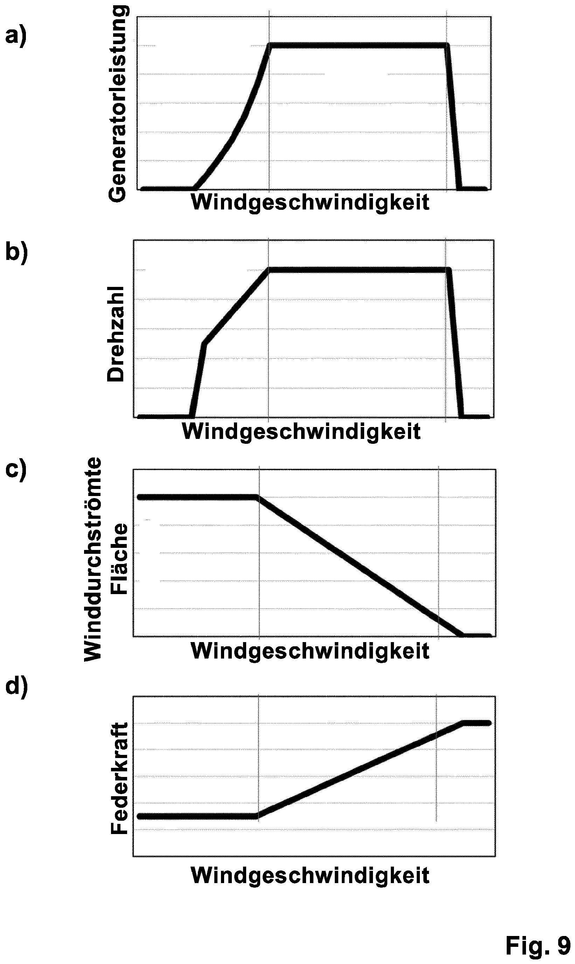

- Figur 9: unterschiedliche Kennlinien in Abhängigkeit von der Windgeschwindigkeit.

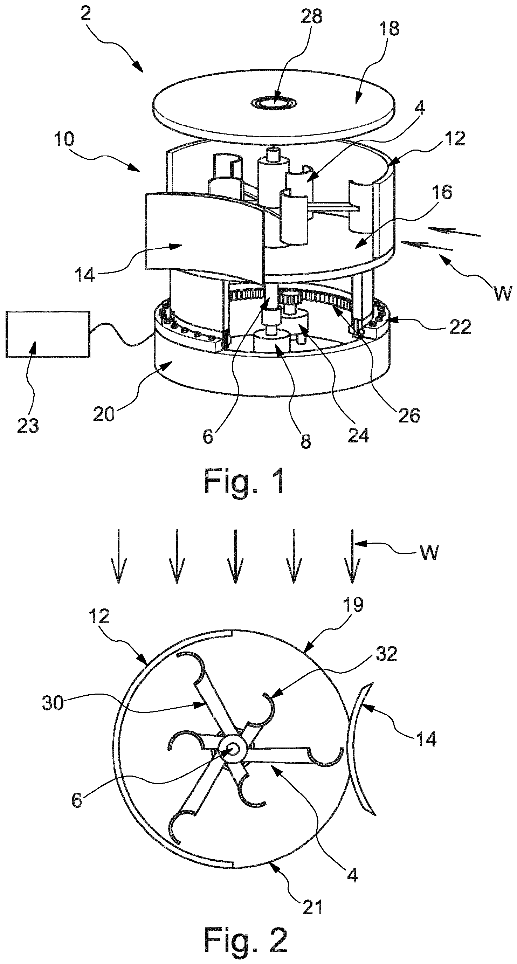

Figur 1 zeigt die schematische Perspektivansicht einer vertikalen Windenergieanlage 2, die einen Rotor 4 aufweist, der an einer Rotorwelle 6 gelagert ist. Die Rotorwelle 6 ist drehbar innerhalb eines Gehäuses 10 gelagert, welches die Rotorwelle 6 teilumfänglich umgibt. Die Rotorwelle 6 ist funktionell mit einer angedeuteten Arbeitsmaschine 8 verbunden und treibt diese an. Bei der Arbeitsmaschine 8 handelt es sich vorzugsweise um einen Generator. Die Arbeitsmaschine 8 kann separat zu der Windenergieanlage 2 ausgebildet sein, vorzugsweise ist sie jedoch Teil der Windenergieanlage 2.

Das Gehäuse 10 weist ein halbzylindersegmentförmiges Windschattenelement 12 sowie ein konkaves Windleitelement 14 auf. Das Windleitelement 14 ist konkav in Richtung auf die Rotorwelle 6 ausgebildet. Das Gehäuse 10 weist zudem einen unteren Abschlussboden 16 und einen oberen Abschlussboden 18 auf, der obere Abschlussboden 18 ist in Figur 1 nach Art einer Explosionsdarstellung dargestellt. Er weist eine Ausnehmung 28 auf, durch die die Rotorwelle 6 in der vorliegenden Ausführungsform im zusammengesetzten Zustand zumindest teilweise hindurchragt. Auf diese Weise ist es möglich, beispielsweise im Rahmen eines modularen Aufbaus, in Figur 1 nicht dargestellte Module 52 auf der dargestellten Ausführungsform anzuordnen und die Windenergieanlage 2 so zu vergrößern.

Das Windschattenelement 12 und das Windleitelement 14 bilden eine, der Übersichtlichkeit in Figur 1 nicht bezeichnete, Windzuleitungsöffnung 19 sowie eine ebenfalls nicht bezeichnete Windableitungsöffnung 21 für den angedeuteten Wind W aus.

Das Gehäuse 10 ist drehbar an einer Basis 20 gelagert. Die Basis 20 weist dazu ein Basis-Gegenlager 22 auf, welches vorliegend flanschartig ausgebildet ist. Das Gehäuse 10 ist relativ zu dem Basis-Gegenlager 22 vorzugsweise mittels einer Kugeloder Wälzlagerung drehbar gelagert.

Die vertikalen Windenergieanlage 2 weist zudem eine in Figur 1 angedeutete elektronische Steuereinrichtung 23 auf. Diese kann Bestandteil der vertikalen Windenergieanlage 2, beispielsweise der Basis 20 sein, oder Teil einer Steuerzentrale. Die Steuereinrichtung 23 ist eingerichtet, das Gehäuse 10 in Abhängigkeit zumindest eines Parameters zu drehen.

Hierzu weist die vertikalen Windenergieanlage 2 und/oder die elektronische Steuereinrichtung 23 vorzugsweise zumindest einen Sensor zum Erfassen oder Ermitteln des zumindest einen Parameters auf.

Die vertikalen Windenergieanlage 2 weist zum Drehen des Gehäuses 10 relativ zu der Basis 20 eine Drehvorrichtung 24 auf, die vorliegend als Azimutantrieb 26 ausgebildet ist. Der Azimutantrieb 26 besteht aus einem Innenzahnkranz, der an dem Gehäuse 10 angeordnet ist, sowie einem Ritzel, welches an der Basis 20 angeordnet ist.

In Figur 2 ist eine Draufsicht auf die in Figur 1 dargestellte vertikalen Windenergieanlage 2 ohne oberen Abschlussboden18 dargestellt. Es ist zu erkennen, dass das Windschattenelement 12 und das Windleitelement 14 eine Windzuleitungsöffnung 19 und eine Windableitungsöffnung 21 für den Wind W ausbilden. In der in Figur 2 dargestellten Stellung des Gehäuses 10 ist die Angriffsfläche, die der Rotor 4 dem Wind W bietet, maximal. Mit anderen Worten ist die vom Wind W durchströmte Fläche der vertikalen Windenergieanlage 2, die senkrecht zum Wind W verläuft, maximal groß.

Vorliegend ist zu erkennen, dass der Rotor 4 an der Rotorwelle 6 gelagert ist und sechs Flügel 30 aufweist, die an ihren von der Rotorwelle 6 abgewandten Enden jeweils eine Schaufel 32 aufweisen. Die Schaufeln 32 weisen einen halbkreisförmigen Querschnitt auf und sind derart orientiert, dass sie dann, wenn sich der Flügel 30 im vom Wind durchströmten Bereich und senkrecht zum Wind befindet, konvex auf den Wind zu ausgebildet sind. Figur 2 ist weiterhin zu entnehmen, dass die Flügel 30 unterschiedlich lang sind, so sind drei der sechs Flügel länger ausgebildet als die anderen drei Flügel. Die Anordnung ist dabei alternierend gewählt. Hierdurch ist es möglich, in der vollständigen vom Wind durchströmten Fläche den Wind W einzufangen und auch das Verhalten des Rotors bei stärker abschattenden Positionen des Gehäuses 10 zu beeinflussen.

In Figur 2 ist zu erkennen, dass in der dort dargestellten Position der Rotor 4 durch das Windschattenelement 12 zur Hälfte abgeschattet ist.

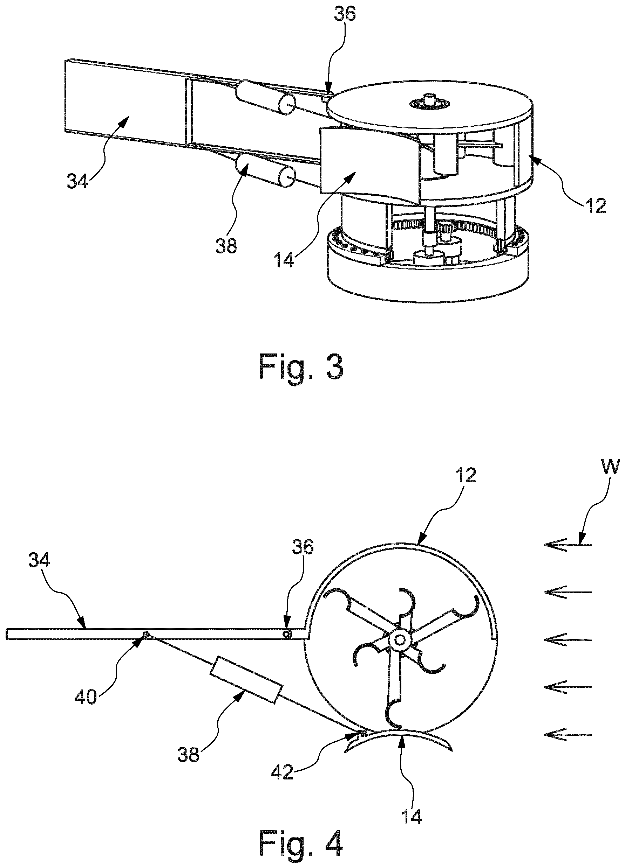

Figur 3 zeigt eine Weiterbildung der Ausführungsform aus den Figuren 1 und 2, in der die vertikalen Windenergieanlage 2 eine Windfahne 34 aufweist. Diese ist gelenkig an dem Gehäuse 10, vorliegend an dem Windschattenelement 12 des Gehäuses 10, befestigt. Daneben besitzt die Windfahne 34 zwei Feder-Dämpfer-Elemente 38, welche einerseits an der Windfahne 34 und andererseits an dem Gehäuse 10 angelenkt sind. Sofern die Windfahne 34 infolge auf sie auftreffenden Windes W relativ zu dem Gehäuse verschwenkt wird, so wird das Gehäuse 10 infolge des auf die Windfahne 34 einwirkenden Windes W gedreht und so beispielsweise die Windenergieanlage 2 dem Wind W nachgeführt.

In einer alternativen Ausgestaltung sind die Feder-Dämpfer-Elemente 38 durch aktive Stelleinrichtungen ersetzt. Mittels dieser ist es vorzugsweise möglich, die Windfahne 34 aktiv gegenüber dem Gehäuse 10, vorliegend dem Windschattenelement 12, zu verschwenken und damit den Anstellwinkel der Windfahne 34 relativ zu dem Gehäuse 10, vorliegend dem Windschattenelement 12 des Gehäuses 10 zu verändern. Bei der Stelleinrichtung handelt es sich vorzugsweise um einen Linearmotor oder um einen Linearantrieb.

Figur 4 zeigt eine Draufsicht auf die Ausführungsform gemäß Figur 3 ohne oberen Abschlussboden 18. Es ist zu erkennen, dass die Windfahne 34 über das Gelenk 36 gelenkig an dem Windschattenelement 12 befestigt ist. Das Feder-Dämpfer-Element 38 ist über einen Windfahnen-Anlenkungspunkt 40 und einen Gehäuse-Anlenkungspunkt 42 jeweils mit der Windfahne 34 und dem Gehäuse 10 verbunden. Vorliegend befindet sich der Gehäuse-Anlenkungspunkt 42 an dem Windleitelement 14.

In der in Figur 4 dargestellten Situation strömt der Wind W parallel zu der Windfahne 34, wobei die Windgeschwindigkeit vorliegend nicht ausreicht, um die Windfahne aus ihrer dargestellten Position gegen das Feder-Dämpfer-Element 38 auszulenken, sodass das Gehäuse 10 in der dargestellten Position keine durch die Windfahne 34 vermittelte Drehbewegung erfährt.

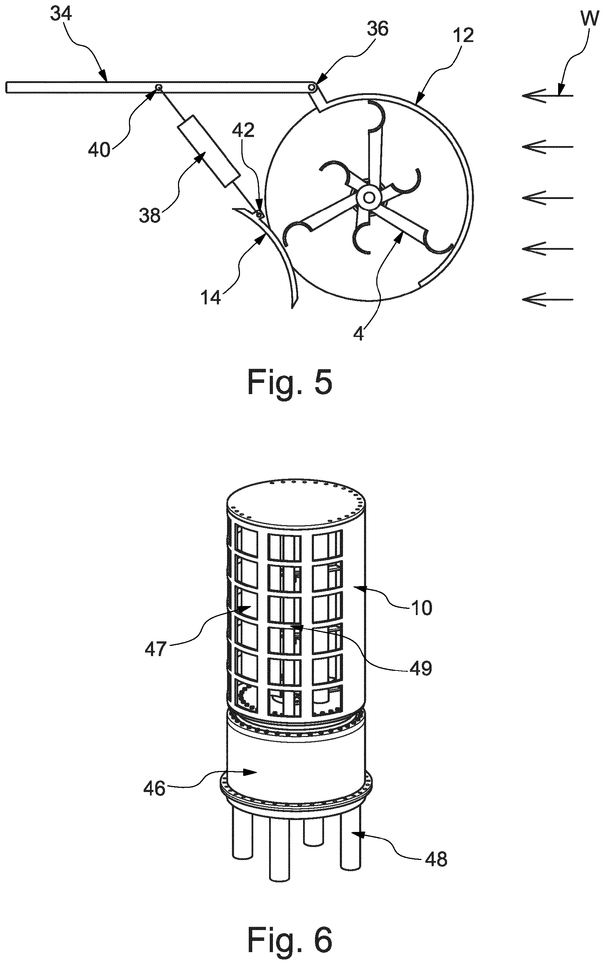

Figur 5 zeigt die Ausführungsform aus den Figuren 3 und 4 ohne oberen Abschlussboden, wobei es sich bei dem Wind W um einen Sturm handelt. Infolge der höheren Windgeschwindigkeit ist das Gehäuse 10 im Vergleich zu Figur 4 gedreht, sodass der Rotor 4 größtenteils im Windschatten des Windschattenelements 12 befindet.

Die Windfahne 34 ist um das Gelenk 36 ausgelenkt und in dem dargestellten Zustand parallel zu dem Wind W ausgerichtet. Durch die Drehung des Gehäuses ist der Abstand zwischen dem Gehäuse-Anlenkungspunkt 42 und dem Windfahnen-Anlenkungspunkt 40 gegenüber Figur 4 verringert, sodass die Feder des Feder-Dämpfer-Elements im Vergleich zu der in Figur 4 dargestellten Position komprimiert ist.

Figur 6 zeigt eine Ausführungsform einer vertikalen Windenergieanlage, in der das Gehäuse 10 kein Windleitelement 14 aufweist. Die Windenergieanlage 2 ist über Stelzen 48 mit dem Erdboden verbunden. Das Gehäuse ist an einer Basis 20 gelagert, welche ein Basisgehäuse 46 aufweist, in dem vorzugsweise eine nicht dargestellte Arbeitsmaschine 8 angeordnet ist.

Das Gehäuse 10 ist fenestriert und weist eine Mehrzahl an Gehäuseausnehmungen 47 auf, durch die der Wind W auf den innerhalb des Gehäuses 10 angedeuteten Rotor 4 strömen und auch wieder aus dem Gehäuse 10 ausströmen kann. Das Gehäuse 10 weist entsprechend horizontale Bereiche 49 auf, in denen das Gehäuse die Rotorwelle 6 vollumfänglich umgibt. Durch diese Ausführung weist das Gehäuse 10 in sich eine erhöhte Stabilität auf, sodass diese Ausführungsform beispielsweise in besonders sturmreichen Regionen bevorzugt einsetzbar ist.

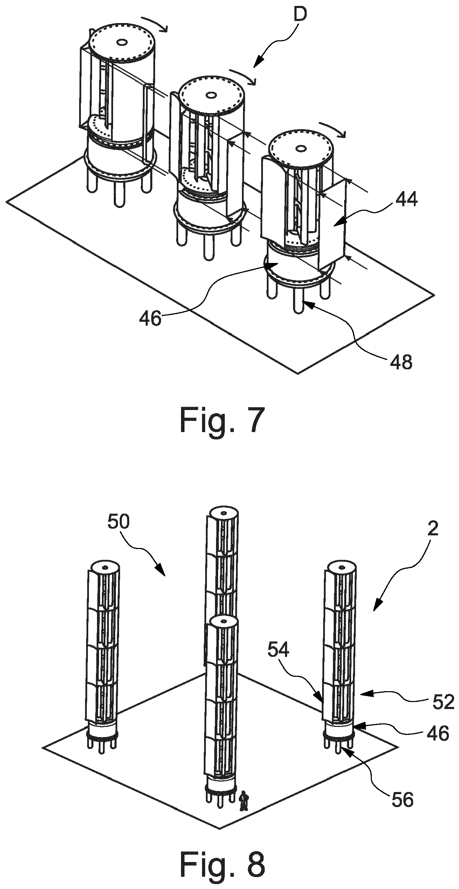

In Figur 7 sind drei Windenergieanlagen 2 abgebildet, die aber nur dieselbe Windenergieanlage 2 mit unterschiedlichen Positionen des Gehäuses 10 darstellen. Die Windenergieanlage 2 ist über Stelzen 48 mit dem Erdboden verbunden. In der dargestellten Ausführungsform der vertikalen Windenergieanlage 2 weist die Basis 20 ein Basisgehäuse 46, in welchem vorzugsweise eine nicht dargestellte Arbeitsmaschine 8 angeordnet ist.

Bei den unterschiedlichen Positionen des Gehäuses handelt sich Positionen, wie sie nach Drehen des Gehäuses 10 um unterschiedliche Wegstrecken erreichbar sind. Die vom Wind W durchströme Fläche 44 ist in Figur 7 angedeutet und in der rechten Darstellung am größten und wird von rechts nach links infolge der Drehung des Gehäuses 10 kleiner. Auf diese Weise ist es möglich, die Menge des durch die vertikalen Windenergieanlage 2 strömenden Windes W zu regulieren und so Einfluss auf die Drehzahl der Rotorwelle 6 zu nehmen. Dies ist insbesondere vorteilhaft, um die Windenergieanlage 2 auch bei unterschiedlichen Windgeschwindigkeiten und/oder Windrichtungen mit einer Nenndrehzahl der Rotorwelle 6 zu betreiben.

Figur 8 zeigt einen Windpark 50 mit vier vertikalen Windenergieanlagen 2. Die vertikalen Windenergieanlagen 2 sind modular aufgebaut, wobei jeweils vier Module 54 übereinander angeordnet sind und das jeweils unterste Modul auf einem Basisbauteil 56, das ein Basisgehäuse 46 aufweist, gelagert ist.

Es ist zu erkennen, dass jedes Modul 52 jeweils ein Gehäuseteilstück 54 aufweist, wobei die Gehäuseteilstücke 54 jeweils zusammenwirken und ein Gehäuse 10 bilden. Dasselbe für die nicht dargestellten Rotorwellenteilstücke, die ebenfalls zusammenwirken und die Rotorwelle 6 bilden.

Die vertikalen Windenergieanlagen 2 des Windparks 50 sind bevorzugt zumindest 20 m, weiter bevorzugt zumindest 40 m, besonders bevorzugt zumindest 60 m hoch, gerechnet vom Boden.

Figur 8 zeigt vier Kennlinien einer Ausführungsform der vertikalen Windenergieanlage 2. In Kennlinie a) ist die Generatorleistung eines von der Rotorwelle 6 angetriebenen Generators in Abhängigkeit von der Windgeschwindigkeit dargestellt. Die Kennlinien sollen jedoch nur schematische Verläufe darstellen, und sind nicht maßstabsgetreu.

Es ist zu erkennen, dass bis sich die Rotorwelle 6 bis zum Erreichen einer unteren Grenz-Windgeschwindigkeit nicht dreht und der Generator damit keine Leistung abgibt. Mit weiter ansteigender Windgeschwindigkeit steigt die Generatorleistung vorliegend exponentiell an und erreicht ab einer Nenn-Windgeschwindigkeit ein Plateau. Die Nenn-Windgeschwindigkeit wird durch die linke der beiden senkrechten Linien angedeutet.

Ab einem gewissen Punkt wird die Abschalt-Windgeschwindigkeit erreicht. Diese ist mit der rechten senkrechten Linie angedeutet. Bei Erreichen der Abschalt-Windgeschwindigkeit wird die Anlage abgeschaltet.

In Kennlinie b) ist die Drehzahl der Rotorwelle 6 in Abhängigkeit von der Windgeschwindigkeit dargestellt. Entsprechend der Ausführung zu a) dreht sich die Rotorwelle 6 bis zum Erreichen einer unteren Grenz-Windgeschwindigkeit nicht. Anschließend steigt sie bis zum Erreichen der Nennwindgeschwindigkeit degressiv an. Analog zu a) wird die Drehzahl anschließend bei steigender Windgeschwindigkeit auf einem Plateau gehalten. Bei Erreichen der Abschalt-Windgeschwindigkeit erfolgt wie bereits beschrieben die Abschaltung.

Um ab Erreichen der Nennwindgeschwindigkeit Drehzahl und/oder Generatorleistung konstant halten zu können, wird die winddurchströmte Fläche 44 ab Erreichen der Nennwindgeschwindigkeit mit steigender Windgeschwindigkeit verringert. Dies erfolgt, um die ansonsten mit der Windgeschwindigkeit steigende Generatorleistung und/oder Drehzahl zu verringern und so konstant zu halten. Dies ist insbesondere daher wichtig, da Windenergieanlagen im Bereich einer Nenndrehzahl und/oder einer Nennleistung betrieben werden sollen und teilweise sogar müssen.

Die Reduzierung der winddurchströmten Fläche ist jedoch begrenzt, da ab einem gewissen Zeitpunkt eine vollständige Abschattung des Rotors 4 erfolgt und die Anlage somit abgeschaltet wird.

Kennlinie d) zeigt die Abhängigkeit der Federkraft eines vorhandenen Feder-Dämpfer-Elements 38 von der Windgeschwindigkeit. Das Feder-Dämpfer-Element ist so abgestimmt, dass bis zum Erreichen der Nenn-Windgeschwindigkeit keine Drehung des Gehäuses stattfindet und somit keine Änderung der Federkraft eintritt. Mit Erreichen der Nennwindgeschwindigkeit steigt die Federkraft des Feder-Dämpfer-Elements 38 linear an. Dies führt zu einer stärkeren Drehung des Gehäuses 10, wobei sich der Abstand zwischen dem Windfahnen-Anlenkungspunkt und dem Gehäuse-Anlenkungspunkt verringert.

Bevorzugt werden die minimale winddurchströmte Fläche und die maximale Federkraft bei der Abschalt-Geschwindigkeit, also der rechten senkrechten Linie in den Kennlinien c) und d) erreicht. Da dies in der Praxis jedoch häufig nicht der Fall ist, ist dies in den Kennlinien c) und d) anders dargestellt.

Über die Kennlinie von Federkraft zu Windgeschwindigkeit lässt sich das Verhalten der vertikalen Windenergieanlage 2 bei unterschiedlichen Windgeschwindigkeiten einstellen. Dies kann beispielsweise ausgenutzt werden, wenn eine Windenergieanlage vollständig passiv betrieben werden soll, also keine aktive Steuerung der Drehung des Gehäuses 10 möglich oder gewollt ist.

**Bezugszeichenliste**

| | | | |
|---|---|---|---|
| 2 | Vertikale Windenergieanlage | | |
| 4 | Rotor | 50 | Windpark |
| 6 | Rotorwelle | 52 | Modul |
| 8 | Arbeitsmaschine | 54 | Gehäuseteilstück |
| | | 56 | Basisbauteil |
| 10 | Gehäuse | | |
| 12 | Windschattenelement | D | Drehrichtung |
| 14 | Windleitelement | W | Wind |
| 16 | Unterer Abschlussboden | | |
| 18 | Oberer Abschlussboden | | |
| 19 | Windzuleitungsöffnung | | |
| | | | |
| 20 | Basis | | |
| 21 | Windableitungsöffnung | | |
| 22 | Basis-Gegenlager | | |
| 23 | Elektronische Steuereinrichtung | | |
| 24 | Drehvorrichtung | | |
| 26 | Azimutantrieb | | |
| 28 | Ausnehmung | | |
| | | | |
| 30 | Flügel | | |
| 32 | Schaufel | | |
| 34 | Windfahne | | |
| 36 | Gelenk | | |
| 38 | Feder-Dämpfer-Element | | |
| | | | |
| 40 | Windfahnen-Anlenkungspunkt | | |
| 42 | Gehäuse-Anlenkungspunkt | | |
| 44 | Winddurchströmte Fläche | | |
| 46 | Basisgehäuse | | |
| 47 | Gehäuseausnehmung | | |
| 48 | Stelzen | | |
| 49 | Horizontaler Bereich | | |

## Patentansprüche

1. Vertikale Windenergieanlage (2), mit
(a) zumindest einem Rotor (4) zum Antreiben einer Arbeitsmaschine (8), der an einer drehbar gelagerten Rotorwelle (6) angeordnet ist, und
(b) einem Gehäuse (10), das die Rotorwelle (6) und den Rotor (4) zumindest teilumfänglich umgibt und relativ zu der Rotorwelle (6) drehbar an einer Basis (20) gelagert ist,
**gekennzeichnet durch**
(c) zumindest eine Drehvorrichtung (24), die eingerichtet ist, das Gehäuse (10) automatisch in Abhängigkeit zumindest eines Parameters zu drehen und dabei den Rotor (4) derart in einen Windschatten des Gehäuses (10) zu bringen, dass ein kinetischer Parameter der Rotorwelle (6) über einen Windgeschwindigkeits-Betriebsbereich und/oder einen Windrichtungs-Betriebsbereich einem Sollwert entspricht, und dass
(d) das Gehäuse (10) ein Windleitelement (14) zum Leiten von Wind (W) auf den Rotor zu aufweist, wobei das Windleitelement (14) dem Wind (W) einen größeren Widerstand entgegensetzt als das übrige Gehäuse, sodass das Gehäuse (10) durch den anströmenden Wind (W) mit einem Drehmoment in Drehrichtung beaufschlagt wird.

2. Vertikale Windenergieanlage (2) nach Anspruch 1, **dadurch gekennzeichnet, dass** das Gehäuse (10) ein zylindersegmentförmiges Windschattenelement (12) aufweist, in dessen Windschatten der Rotor (4) zumindest teilweise bringbar ist.

3. Vertikale Windenergieanlage (2) nach einem der Ansprüche 1 oder 2, **dadurch gekennzeichnet, dass** das Windleitelement (14) dem Windschattenelement (12) radial gegenüberliegt.

4. Vertikale Windenergieanlage (2) nach einem der vorstehenden Ansprüche, **dadurch gekennzeichnet, dass** die Drehvorrichtung (24) eine Windfahne (34) aufweist, die zumindest ein Feder-Dämpfer-Element (38) besitzt.

5. Vertikale Windenergieanlage (2) nach Anspruch 4, **dadurch gekennzeichnet, dass** eine Federkraft des zumindest einen Feder-Dämpfer-Elements (38) einstellbar ist und dem Feder-Dämpfer-Element (38) eine Einstellvorrichtung zugeordnet ist, die eingerichtet ist, die Federkraft in Abhängigkeit einer Windgeschwindigkeit automatisch einzustellen.

6. Vertikale Windenergieanlage (2) nach Anspruch 4, **dadurch gekennzeichnet, dass** das zumindest eine Feder-Dämpfer-Element (38) passiv ausgebildet ist.

7. Vertikale Windenergieanlage (2) nach einem der vorstehenden Ansprüche, **dadurch gekennzeichnet, dass** die Drehvorrichtung (24) eine Windfahne (34) aufweist, die ein aktives Stellelement besitzt.

8. Vertikale Windenergieanlage (2) nach Anspruch 7, **dadurch gekennzeichnet, dass** das aktive Stellelement ein Linearmotor oder Linearantrieb ist.

9. Vertikale Windenergieanlage (2) nach einem der vorstehenden Ansprüche, **dadurch gekennzeichnet, dass** die Drehvorrichtung (24) einen Azimut-Antrieb (26) aufweist.

10. Vertikale Windenergieanlage (2) nach einem der vorstehenden Ansprüche, **gekennzeichnet durch** eine elektronische Steuereinrichtung (23), die eingerichtet ist, automatisch auf die zumindest eine Drehvorrichtung (24) einzuwirken.

11. Vertikale Windenergieanlage (2) nach Anspruch 10, **dadurch gekennzeichnet, dass** die elektronische Steuereinrichtung (23) eingerichtet ist, automatisch bei Überschreiten einer Nenn-Windgeschwindigkeit und/oder eines kinetischen Soll-Parameters, das Gehäuse (10) zu drehen, um den im Windschatten des Gehäuses (10) liegenden Anteil des Rotors (4) zu vergrößern.

12. Vertikale Windenergieanlage (2) nach einem der vorstehenden Ansprüche, **dadurch gekennzeichnet, dass** sie aus zumindest zwei Modulen (52) besteht, wobei jedes Modul (52)
(a) jeweils zumindest einen Rotor (4) aufweist, der an einem Rotorwellenteilstück angeordnet ist, und
(b) jeweils ein Gehäuseteilstück (54) aufweist, wobei die Rotorwellenteilstücke miteinander zusammenwirken und die Rotorwelle (6) bilden, und die Gehäuseteilstücke (54) miteinander zusammenwirken und das Gehäuse (10) bilden.

13. Verfahren zum Betreiben einer vertikalen Windenergieanlage (2) nach einem der vorstehenden Ansprüche, wobei die vertikale Windenergieanlage (2) einem Wind (W) ausgesetzt ist, mit den Schritten:
(a) Bestimmen eines kinetischen Parameters der Rotorwelle (6),
(b) Vergleichen des kinetischen Parameters mit einem Sollwert,
(c) Drehen des Gehäuses (10), sodass ein im Windschatten des Gehäuses (10) liegender Anteil des Rotors (4) verändert wird, bis der kinetische Parameter mit dem Sollwert übereinstimmt.

14. Verfahren nach Anspruch 13, **dadurch gekennzeichnet, dass**
(a) der kinetische Parameter die Drehzahl der Rotorwelle (6) ist,
(b) wobei die Rotorwelle (6) bei einer Nenn-Windgeschwindigkeit ihre Solldrehzahl aufweist und
(c) das Gehäuse (10) bei einer Überschreitung der Nenn-Windgeschwindigkeit derart gedreht wird, dass der im Windschatten des Gehäuses (10) liegende Anteil des Rotors (4) monoton in Abhängigkeit von der Überschreitung vergrößert wird.
